# FASCICULE DE BREVET EUROPEEN

(11) **EP 2 594 375 B1**
(45) Date de publication et mention de la délivrance du brevet: **04.10.2017**
(21) Numéro de dépôt: 12306410.7
(22) Date de dépôt: 14.11.2012
(51) Int. Cl.: B26D 1/547, B26F 3/12, B29C 65/76, B29C 65/08, B29L 31/30

(54) **Procédé de désassemblage de deux éléments soudés par ultrason et élément apte à être soudé par ultrason à un autre élément permettant la mise en oeuvre dudit procédé**
Verfahren zur Demontage von zwei ultraschallverschweißten Teilen, und Teil, das mit einem anderen Teil über Ultraschall verschweißt werden kann, das die Umsetzung dieses Verfahrens ermöglicht
Method for disassembling two ultrasonically welded elements and element ultrasonically weldable to another element enabling said method to be carried out

(30) Priorité: 15.11.2011 FR 1160366
(43) Date de publication de la demande: 22.05.2013
(73) Titulaire: Airbus Opérations SAS, 31060 Toulouse (FR)
(72) Inventeur: Charles, Julien, 31300 Toulouse (FR); Gallant, Guillaume, 31480 Laréole (FR); Soula Denis, 31300 Toulouse (FR)
(74) Mandataire: Fantin, Laurent

(56) Documents cités:
- EP-A1- 1 632 357
- US-A- 5 591 364

## Description

La présente invention se rapporte à un procédé de désassemblage de deux éléments soudés par ultrason ainsi qu'à un élément apte à être soudé par ultrason à un autre élément permettant la mise en oeuvre dudit procédé. L'invention est plus particulièrement adaptée pour désolidariser un support ou une partie d'un support soudé par ultrason à une paroi.

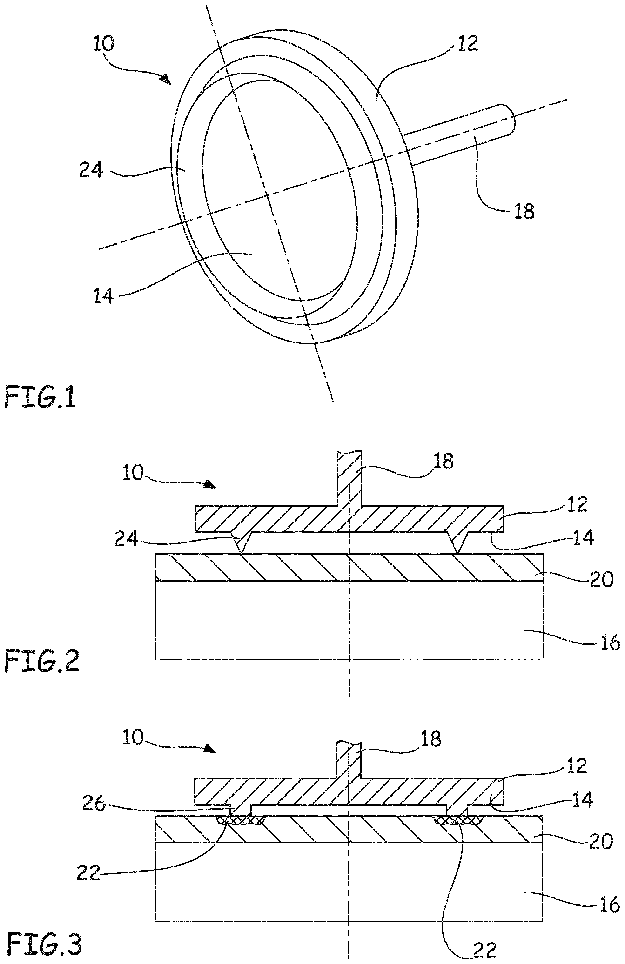

Selon un mode de réalisation illustré sur les figures 1 à 3, un support 10 comprend un corps 12, en forme de pastille cylindrique avec une face frontale 14 susceptible d'être plaquée et reliée à une paroi 16 d'un aéronef. Le corps 12 est prolongé par une tige 18 qui peut permettre de relier un élément « peu lourd », notamment inférieur à 2 Kg, à la structure de l'aéronef, comme par exemple un câble électrique, un tuyau, un matelas d'isolation, un mobilier de cabine ou autre. Le support 10 est réalisé en matériau composite, par exemple en résine thermoplastique renforcée ou non de fibres.

La paroi 16 de l'aéronef est également en matériau composite, et comprend par exemple des fibres noyées dans une matrice en résine thermodurcissable. Selon le mode de réalisation illustré sur les figures 2 et 3, la paroi 16 comprend un revêtement 20 en une matière thermoplastique. Avantageusement, la structure de la paroi et son revêtement sont co-polymérisés ce qui permet d'obtenir une liaison solide entre le revêtement et la paroi.

Comme illustré sur la figure 3, le support 10 est fixé à la paroi 16 en utilisant un procédé de soudage par ultrason.

Selon cette technique, le support est en contact avec un émetteur de vibrations et sa face frontale 14 est appliquée contre la paroi. En suivant, en appliquant des vibrations, on génère au niveau de l'interface entre le support et la paroi un échauffement jusqu'à leurs températures de fusion, permettant aux chaînes moléculaires des deux éléments en contact de se mêler dans une zone de diffusion 22. Après l'arrêt des vibrations et refroidissement, on obtient une jonction solide.

Pour concentrer l'échauffement, la face frontale du support comprend au moins une forme en saillie appelée directeur d'énergie 24. Comme illustré sur la figure 1, un directeur d'énergie décrit un anneau approximativement concentrique au corps du support avec une section triangulaire et une hauteur de l'ordre de 1,5 mm. Après l'arrêt des vibrations, le directeur d'énergie 24 est déformé et forme une jonction 26 entre le support et la paroi, comme illustré sur la figure 3. Cette technique d'assemblage est notamment décrite dans les documents EP-2.004.388 et EP-1.423256.

Suite à un tel assemblage, il peut être nécessaire de réinstaller un support par exemple s'il est cassé ou en raison d'un assemblage initial défectueux. Or, le soudage par ultrason est une technique d'assemblage quasi irréversible. Elle est d'autant plus irréversible que le ou les directeurs d'énergie n'ont plus la même géométrie qu'avant l'assemblage et ne comprennent plus de forme pointue permettant de concentrer l'énergie vibratoire.

Pour désassembler le support, une première solution consiste à utiliser un outil coupant et chauffant comme une lame et à la glisser entre le support et la paroi de manière à détruire la jonction 26. Cette solution n'est pas pleinement satisfaisante car les risques d'endommagement de la paroi en matériau composite en raison de la géométrie de l'outil sous forme d'une lame et de la chaleur produite par ce dernier sont élevés.

Une autre solution consiste à utiliser un couteau à ultrason qui est inséré entre le support et la paroi afin de détruire la jonction 26. Comme précédemment cette solution n'est pas pleinement satisfaisante car les risques d'endommagement de la paroi en matériau composite sont élevés.

Une autre solution consiste à découper le support en utilisant un outil rotatif. Cet outil rotatif comprend une forme cylindrique avec au niveau d'une face frontale au moins une arête tranchante et un orifice pour permettre le passage de la tige 18 du support qui peut être utilisée comme un axe de rotation. Cet outil comprend également deux poignées radiales qui permettent de le manoeuvrer.

Cet outil rotatif permet par un usinage à la manière d'un fraisage en bout de retirer de la matière et de supprimer ainsi le support.

Contrairement aux deux premières solutions, cette solution permet de limiter les risques d'endommagement de la paroi. Cependant, il peut arriver que la surface de la paroi soit rayée après cette opération de désassemblage.

Le document US-5.591.364 propose de positionner un fil à proximité de la jonction formée par ultrason puis de faire circuler un courant électrique dans le fil de manière à provoquer un échauffement par effet Joule afin de provoquer le ramollissement de la jonction. Selon ce document, le fil est fixe. Comme précédemment, cette solution n'est pas pleinement satisfaisante car les risques d'endommagement de la paroi en matériau composite sont élevés en raison de l'échauffement provoqué par le fil. De plus, cette solution n'est pas simple à mettre en oeuvre dans la mesure où il est difficile de positionner correctement le fil par rapport à la jonction.

Aussi, la présente invention vise à pallier les inconvénients de l'art antérieur en proposant un procédé de désassemblage de deux éléments assemblés par ultrason facilitant le désassemblage et limitant les risques d'endommagement de la paroi.

A cet effet, l'invention a pour objet un procédé de désassemblage de deux éléments soudés par ultrason, un des éléments comprenant au niveau d'une face en regard de l'autre élément un directeur d'énergie qui concentre l'échauffement lors du soudage par ultrason et qui forme une jonction de matière entre les deux éléments assemblés après le soudage par ultrason, caractérisé en ce que le procédé consiste à positionner un fil entre les deux éléments assemblés, de manière sécante au directeur d'énergie, ledit fil ayant des caractéristiques mécaniques adaptées lui permettant de pouvoir couper la jonction formée par le directeur d'énergie et à déplacer le fil entre les deux éléments assemblés de manière à couper ladite jonction.

D'autres caractéristiques et avantages ressortiront de la description qui va suivre de l'invention, description donnée à titre d'exemple uniquement, en regard des dessins annexés sur lesquels :
- la figure 1 est une vue en perspective d'un exemple de support selon l'art antérieur montrant plus particulièrement un directeur d'énergie avant assemblage,
- la figure 2 est une coupe illustrant le support de la figure 1 plaqué contre une paroi avant assemblage,
- la figure 3 est une coupe illustrant le support et la paroi de la figure 2 après assemblage par soudage par ultrason selon l'art antérieur,
- la figure 4A est une coupe d'un support selon une première variante de l'invention,
- la figure 4B est une vue de face du support de la figure 4A,
- la figure 5 est une coupe illustrant un support selon l'invention solidarisé à une paroi par soudage par ultrason,
- la figure 6A est une coupe d'un support selon une autre variante de l'invention,
- la figure 6B est une vue de face du support de la figure 6A,
- la figure 7 est une vue en perspective d'un support selon une autre variante de l'invention,
- la figure 8A est une coupe du support de la figure 7 selon la ligne brisée A-A solidarisé à une paroi, et
- la figure 8B est une coupe du support de la figure 7 selon un plan contenant une gorge, après l'introduction d'un fil permettant de le désolidariser d'une paroi.

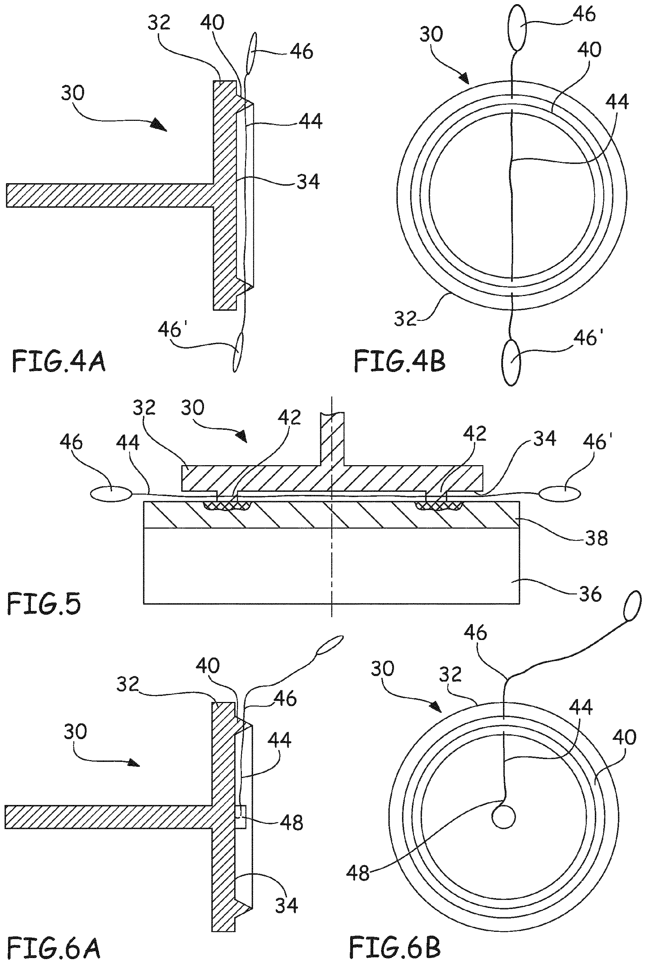

Sur la figure 5, on a illustré un support 30 solidarisé à une paroi par soudage par ultrason.

Selon une application et à titre d'exemple seulement, un support 30 comprend un corps 32, en forme de pastille cylindrique avec une face frontale 34 susceptible d'être plaquée et reliée à une paroi 36 d'un aéronef. Le corps 32 est prolongé par une tige 38 qui peut permettre de relier un élément « peu lourd », notamment inférieur à 2 Kg, à la structure de l'aéronef, comme par exemple un câble électrique, un tuyau, un matelas d'isolation, un mobilier de cabine ou autre.

Le support 30 est réalisé en matériau composite, par exemple en résine thermoplastique renforcée ou non de fibres.

La paroi 36 de l'aéronef est également en matériau composite, et comprend par exemple des fibres noyées dans une matrice en résine thermodurcissable. Selon le mode de réalisation illustré sur la figure 5, la paroi 36 comprend un revêtement 38 en une matière thermoplastique. Avantageusement, la structure de la paroi et son revêtement sont co-polymérisés.

Le support 30 est solidarisé à la paroi 36 par soudage par ultrason.

Bien entendu, l'invention n'est pas limitée à cet exemple, elle peut s'appliquer à d'autres domaines techniques, à d'autres éléments assemblés par soudage par ultrason, les éléments étant en des matériaux compatibles à ce mode d'assemblage.

De manière générale, un premier élément comme par exemple un support est relié à un second élément comme par exemple une paroi par un soudage par ultrason et l'un des éléments comprend une face frontale 34 avec au moins un directeur d'énergie 40.

De manière connue, un directeur d'énergie 40 est une forme en saillie par rapport à la face frontale 34 avec une surface de contact réduite de manière à concentrer l'énergie vibratoire et de la sorte l'échauffement.

Selon un mode de réalisation, un directeur d'énergie 40 a une forme d'anneau approximativement concentrique au corps du support avec une section triangulaire et une hauteur de l'ordre de 1,5 mm. Cependant, l'invention n'est pas limitée à cette géométrie de directeur d'énergie. Ainsi, selon un autre exemple, la face frontale 34 peut comprendre trois directeurs d'énergie sous forme chacun d'un cône.

De manière générale, la face frontale comprend au moins un directeur d'énergie avec une surface de contact réduite avant l'assemblage de manière à concentrer l'énergie vibratoire et donc l'échauffement lors du soudage par ultrason et qui forme une jonction 42 de matière entre les deux éléments assemblés après le soudage par ultrason.

Le directeur d'énergie 40 et le procédé d'assemblage par soudage par ultrason ne sont pas plus décrits car ils sont connus de l'homme du métier et notamment décrits dans les documents EP-2.004.388 et EP-1.423256.

Selon l'invention, un des deux éléments assemblés par soudage par ultrason notamment le support 30 comprend un fil 44 dont une portion est incluse dans le directeur d'énergie 40 lors de sa fabrication, ce fil 44 ayant des caractéristiques mécaniques adaptées, notamment en matière de résistance à la torsion et au cisaillement, lui permettant de pouvoir couper la jonction 42 formée par le directeur d'énergie 40.

Ce fil 44 peut être métallique ou en matière fibreuse.

Selon un mode de réalisation, le fil 44 est en matière fibreuse non inflammable et non conductrice d'électricité, comme par exemple en fibre de verre tressé, de faible diamètre, de l'ordre de 0,50 à 1 mm pour donner un ordre de grandeur.

En variante, le fil 44 peut être en un matériau conducteur électrique.

La nature et le diamètre du fil 44 sont ajustés par l'homme du métier en fonction notamment du matériau du directeur d'énergie 40 afin de pouvoir couper la jonction 42 formée par ce dernier après l'assemblage par soudage par ultrason.

Avantageusement, dans le directeur d'énergie 40, la portion du fil 44 est disposée dans un plan sensiblement parallèle à la face frontale 34.

Le fil 44 traverse le directeur d'énergie au moins une fois et comprend des portions disposées de part et d'autre de la portion incluse dans le directeur d'énergie. En présence de plusieurs directeurs d'énergie, un seul fil 44 peut traverser tous les directeurs d'énergie. En variante, on peut prévoir plusieurs fils, chacun d'eux traversant un ou plusieurs directeurs d'énergie.

Selon le mode de réalisation illustré sur les figures 4A et 4B, le fil 44 traverse deux fois le directeur d'énergie. Selon le mode de réalisation illustré sur les figures 6A et 6B, le fil 44 traverse une seule fois le directeur d'énergie.

Selon l'invention, le fil 44 comprend au moins une portion 46 susceptible d'être saisie pour pouvoir le manoeuvrer.

Selon une première variante illustrée sur les figures 4A et 4B, le fil 44 comprend deux portions 46, 46' susceptibles d'être saisies.

Selon une autre variante, illustrée sur les figures 6A et 6B, le fil 44 comprend une portion 46 susceptible d'être saisie et une autre portion 48 fixe par rapport à un des deux éléments assemblés, notamment reliée au support. Selon cette variante, le fil 44 comprend des moyens de préhension à une première extrémité et des moyens pour relier le fil à un des deux éléments assemblés, notamment au support, à une seconde extrémité.

La ou les portions susceptibles d'être saisies correspondent aux extrémités du fil 44.

Afin de faciliter la préhension du fil, les portions 46, 46' susceptibles d'être saisies comprennent des moyens de préhension. Selon les cas, les moyens de préhension peuvent être une boucle formée par le fil 44, ou des languettes solidarisées au fil. A titre d'exemple, les languettes sont en matière plastique dur ou constituées d'un morceau de carton à l'intérieur duquel le fil 44 est collé.

D'autres solutions pourraient être envisagées pour faciliter la préhension du fil.

Dans le cas d'un support en un matériau thermoplastique, réalisé par moulage par injection plastique, le fil 44 est inséré dans le moule avant l'injection de matière. Si besoin, le fil peut être localement enrobé d'un film anti-adhésif de type polytrétrafluoroéthylène, pour limiter les risques de collage de la matière thermoplastique.

Le fait qu'une portion du fil soit incluse dans le directeur d'énergie permet au fil 44 d'être lié à l'élément à souder ce qui n'engendre pas de modification du procédé d'assemblage par soudage ultrason qui est conforme à celui pratiqué pour souder des supports sans fil 44 de l'art antérieur.

De préférence, le fil est distant de la surface de contact du directeur d'énergie 40 pour ne pas interférer avec l'opération de soudage par ultrason. Avantageusement, le fil est positionné dans la portion du directeur d'énergie proche de la face frontale 34, correspondant au tiers de sa hauteur.

Pour désassembler le support 30, l'opérateur saisit une ou deux portions 46, 46' du fil 44 et exerce un effort de manière à provoquer un mouvement rotatif de la ou des portions du fil 44 autour de la jonction 42 formée par le directeur d'énergie 40. Ce mouvement rotatif du fil engendre la découpe de la jonction et la séparation des deux éléments préalablement assemblés.

Selon la variante illustrée sur les figures 4A et 4B, le mouvement rotatif est effectué approximativement sur un demi-tour (180°). Selon la variante illustrée sur les figures 6A et 6B, le mouvement rotatif est effectué approximativement sur un tour complet (360°).

Le fil étant en matériau plus résistant que celui de la jonction 42, cette dernière est découpée par le fil.

En variante, on peut faire circuler un courant électrique dans le fil 44, de manière à provoquer un échauffement du fil par effet joule qui favorise l'action de découpe du fil 44. Contrairement à l'art antérieur, le désassemblage découle essentiellement de l'action de coupe du fil et non de son échauffement qui ne fait que favoriser l'action de coupe. Cet échauffement n'étant pas suffisant à lui seul pour obtenir la rupture de la jonction.

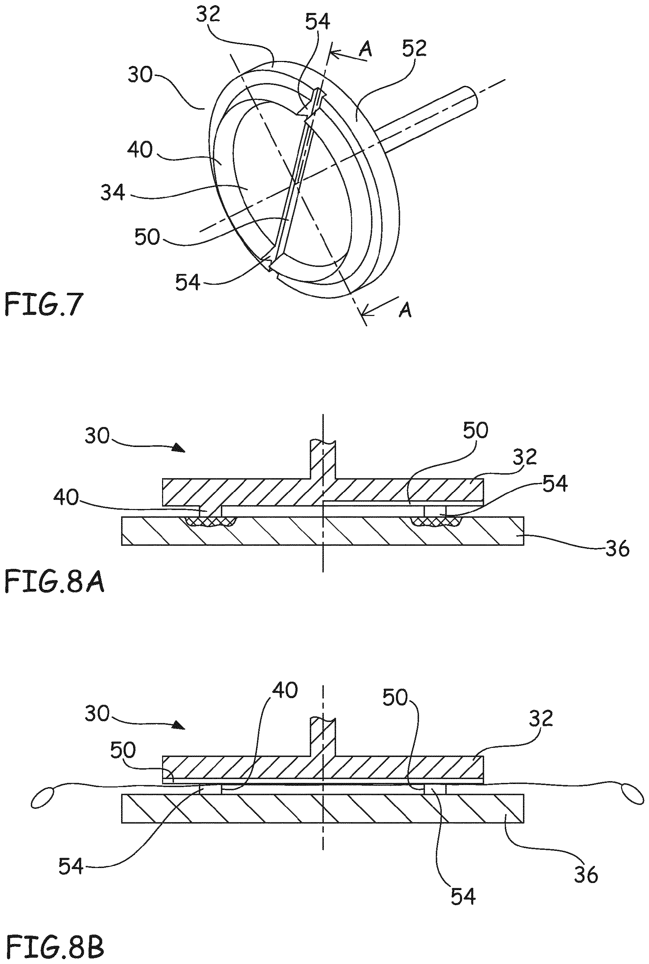

Sur les figures 7, 8A et 8B, on a représenté un support 30 selon une autre variante. Comme précédemment, selon un mode de réalisation, un support 30 comprend un corps 32, en forme de pastille cylindrique avec une face frontale 34 susceptible d'être plaquée et reliée à une paroi 36 d'un aéronef.

Il comprend au niveau de sa face frontale 34 au moins un directeur d'énergie 40. Selon cette variante, le support 30 comprend au niveau de sa face frontale 34 au moins une gorge 50 permettant de positionner au moins un fil 44 entre le support 30 et la paroi 36 sur laquelle il est fixé. Cette gorge a une section adaptée pour pouvoir faire glisser un fil entre le support 30 et la paroi 36 sur laquelle il est fixé.

La gorge 50 est sécante avec le directeur d'énergie 40 en deux points. Avantageusement, comme illustré sur la figure 7, la gorge 50 débouche au niveau de la face périphérique 52 du support 30. Selon un mode de réalisation, la gorge 50 s'étend selon une ligne correspondant à un diamètre.

De préférence, au niveau d'un point d'intersection avec une gorge, le directeur d'énergie 40 comprend une découpe 54. Selon un mode de réalisation illustré sur la figure 7, la découpe 54 s'étend sur toute la hauteur du directeur d'énergie 40 et forme une fente. En variante, la découpe 54 s'étend seulement sur une partie de la hauteur du directeur d'énergie, plus particulièrement sur un tiers de sa hauteur à partir de la face frontale 34, et forme un chas dans lequel peut être introduit le fil 44.

Ainsi selon la variante illustrée sur les figures 7, 8A et 8B, le fil 44 peut ne comprendre aucune portion incluse dans le directeur d'énergie 40 lors de sa fabrication.

Le fil utilisé pour désolidariser les éléments assemblés par soudage par ultrason peut être relié au support par tous moyens appropriés. En variante, il peut ne pas être relié au support et un même fil peut être utilisé pour désolidariser successivement plusieurs supports.

Quelle que soit la variante, au moins un des éléments assemblés comprend des moyens pour positionner au moins un fil 44 entre les deux éléments assemblés, de manière sécante au directeur d'énergie. Pour désolidariser les deux éléments, il suffit alors de déplacer le fil entre les deux éléments assemblés de manière à découper la ou les jonctions 42 formées par le directeur d'énergie après le soudage par ultrason.

## Revendications

1. Procédé de désassemblage de deux éléments soudés par ultrason, un des éléments comprenant au niveau d'une face en regard de l'autre élément un directeur d'énergie (40) qui concentre l'échauffement lors du soudage par ultrason et qui forme une jonction (42) de matière entre les deux éléments assemblés après le soudage par ultrason, **caractérisé en ce que** le procédé consiste à positionner un fil (44) entre les deux éléments assemblés, de manière sécante au directeur d'énergie (40), ledit fil (44) ayant des caractéristiques mécaniques adaptées lui permettant de pouvoir couper la jonction (42) formée par le directeur d'énergie (40) et à déplacer le fil entre les deux éléments assemblés de manière à couper la jonction (42).

2. Procédé selon la revendication 1, **caractérisé en ce qu'**il consiste à exercer un effort sur le fil (44) de manière à provoquer un mouvement rotatif d'une ou plusieurs portions du fil (44) autour de la jonction (42) formée par le directeur d'énergie (40), ce mouvement rotatif du fil engendrant la séparation des deux éléments.

3. Procédé selon la revendication 1 ou 2, **caractérisé en ce qu'**il consiste à faire circuler un courant électrique dans le fil (44) de manière à provoquer un échauffement du fil par effet joule.

4. Elément apte à être assemblé par soudage à ultrason à un autre élément et permettant de mettre en oeuvre le procédé selon l'une quelconque des revendications précédentes, ledit élément comprenant au niveau d'une face un directeur d'énergie (40) qui concentre l'échauffement lors du soudage par ultrason et qui forme une jonction (42) de matière après le soudage par ultrason, **caractérisé en ce que** l'élément comprend au moins un fil (44) dont une portion est incluse dans le directeur d'énergie (40), ledit fil (44) ayant des caractéristiques mécaniques adaptées lui permettant de pouvoir couper la jonction (42) formée par le directeur d'énergie (40).

5. Elément selon la revendication 4, **caractérisé en ce que** le fil (44) comprend des moyens de préhension.

6. Elément selon la revendication 5, **caractérisé en ce que** le fil (44) comprend de part et d'autre du directeur d'énergie des moyens de préhension.

7. Elément selon la revendication 5, **caractérisé en ce que** le fil (44) comprend à une première extrémité des moyens de préhension et à une seconde extrémité des moyens pour relier le fil à l'élément.

8. Elément selon l'une quelconque des revendications 4 à 7, **caractérisé en ce que** la portion du fil (44) incluse dans le directeur d'énergie est disposée dans un plan sensiblement parallèle à la face comprenant le directeur d'énergie.

9. Elément apte à être assemblé par soudage à ultrason à un autre élément et permettant de mettre en oeuvre le procédé selon l'une quelconque des revendications 1 à 3, ledit élément comprenant au niveau d'une face un directeur d'énergie (40) qui concentre l'échauffement lors du soudage par ultrason, qui forme une jonction (42) de matière après le soudage par ultrason et qui comprend, au niveau de la face comprenant le directeur d'énergie, au moins une gorge (50) sécante avec le directeur d'énergie (40) et permettant de positionner au moins un fil (44), **caractérisé en ce que** la gorge (50) est sécante avec le directeur d'énergie (40) en deux points.

10. Elément selon la revendication 9, **caractérisé en ce qu'**au niveau d'un point d'intersection avec une gorge (50), le directeur d'énergie (40) comprend une découpe (54).

11. Elément selon la revendication 10, **caractérisé en ce que** la découpe (54) s'étend sur toute la hauteur du directeur d'énergie (40).

12. Elément selon l'une quelconque des revendications 4 à 11, **caractérisé en ce qu'**il comprend un fil (44) positionné dans la gorge (50).

13. Elément selon la revendication 12, **caractérisé en ce que** le fil (44) est en matière fibreuse.

14. Elément selon les revendications 12 ou 13, **caractérisé en ce que** le fil (44) a un diamètre de l'ordre de 0,50 à 1 mm.

15. Elément selon l'une quelconque des revendications 12 à 14, **caractérisé en ce que** le fil (44) est en un matériau conducteur électrique.

## Patentansprüche

1. Verfahren zur Demontage von zwei mittels Ultraschall verschweißten Elementen, wobei eines der Elemente im Bereich einer dem anderen Element gegenüberliegenden Seite einen Energielenker (40) aufweist, der die Erwärmung beim Ultraschallschweißen konzentriert und eine Materialverbindung (42) zwischen den nach dem Ultraschallschweißen verbundenen Elementen bildet, **dadurch gekennzeichnet, dass** das Verfahren darin besteht, eine Schnur (44) auf eine den Energielenker (40) schneidende Weise zwischen die beiden verbundenen Elemente anzuordnen, wobei die Schnur (44) mechanische Eigenschaften aufweist, die dazu geeignet sind, diese in die Lage zu versetzen, die von dem Energielenker (40) gebildete Verbindung (42) zu durchtrennen, und darin besteht, die Schnur zwischen den beiden verbundenen Elementen zu verlagern, um auf diese Weise die Verbindung (42) zu durchtrennen.

2. Verfahren nach Anspruch 1, **dadurch gekennzeichnet, dass** dieses darin besteht, auf die Schnur (44) derart einzuwirken, dass eine Drehbewegung von einem oder mehreren Abschnitten der Schnur (44) um die von dem Energielenker (40) gebildete Verbindung (42) hervorgerufen wird, wobei die Drehbewegung der Schnur die Trennung der beiden Elemente herbeiführt.

3. Verfahren nach Anspruch 1 oder 2, **dadurch gekennzeichnet, dass** dieses darin besteht, einen elektrischen Strom durch die Schnur (44) zu schicken, um auf diese Weise eine Erwärmung der Schnur durch den Joule-Effekt zu bewirken.

4. Element, das dazu eingerichtet ist, durch Ultraschallschweißen mit einem anderen Element verbunden zu werden und das die Ausführung des Verfahrens nach einem der vorhergehenden Ansprüche gestattet, wobei das Element im Bereich einer Seite einen Energielenker (40) aufweist, der die Erwärmung beim Ultraschallschweißen konzentriert und eine Materialverbindung (42) nach dem Ultraschallschweißen bildet, **dadurch gekennzeichnet, dass** das Element wenigstens eine Schnur (44) aufweist, von der ein Abschnitt im Energielenker (40) umfasst ist, wobei die Schnur (44) mechanische Eigenschaften aufweist, die es ihr gestatten, die von dem Energielenker (40) gebildete Verbindung (42) durchtrennen zu können.

5. Element nach Anspruch 4, **dadurch gekennzeichnet, dass** die Schnur (44) Greifmittel umfasst.

6. Element nach Anspruch 5, **dadurch gekennzeichnet, dass** die Schnur (44) auf beiden Seiten des Energielenkers Greifmittel umfasst.

7. Element nach Anspruch 5, **dadurch gekennzeichnet, dass** die Schnur (44) an einem ersten Ende Greifmittel und an einem zweiten Ende Mittel umfasst, um die Schnur mit dem Element zu verbinden.

8. Element nach einem der Ansprüche 4 bis 7, **dadurch gekennzeichnet, dass** der Abschnitt der Schnur (44) der von dem Energielenker umfasst ist, in einer zu der Seite, die den Energielenker aufweist, im Wesentlichen parallelen Ebene angeordnet ist.

9. Element, das geeignet ist, durch Ultraschallschweißen mit einem anderen Element verbunden zu werden, und das die Ausführungen des Verfahrens nach einem der Ansprüche 1 bis 3 gestattet, wobei das Element im Bereich einer Seite einen Energielenker (40) aufweist, der beim Ultraschallschweißen die Erwärmung konzentriert, der eine Materialverbindung (42) nach dem Ultraschallschweißen bildet und der im Bereich der den Energielenker aufweisenden Seite wenigstens eine Rille (50) aufweist, die sich mit dem Energielenker (40) schneidet und es gestattet, wenigstens eine Schnur (44) anzuordnen, **dadurch gekennzeichnet, dass** sich die Rille (50) mit dem Energielenker (40) in wenigstens zwei Punkten schneidet.

10. Element nach Anspruch 9, **dadurch gekennzeichnet, dass** der Energielenker im Bereich eines Schnittpunkts mit der Rille (50) eine Ausnehmung (54) aufweist.

11. Element nach Anspruch 10, **dadurch gekennzeichnet, dass** sich die Ausnehmung (54) über die gesamte Höhe des Energielenkers (40) erstreckt.

12. Element nach einem der Ansprüche 4 bis 11, **dadurch gekennzeichnet, dass** dieses eine in der Rille (50) angeordnete Schnur (44) aufweist.

13. Element nach Anspruch 12, **dadurch gekennzeichnet, dass** die Schnur (44) aus Fasermaterial ist.

14. Element nach Anspruch 12 oder 13, **dadurch gekennzeichnet, dass** die Schnur (44) einen Durchmesser in der Größenordnung von 0,50 bis 1 mm aufweist.

15. Element nach einem der Ansprüche 12 bis 14, **dadurch gekennzeichnet, dass** die Schnur (44) aus einem elektrisch leitenden Material ist.

## Claims

1. A method for disassembling two ultrasonically welded elements, one of the elements comprising, at a surface opposite the other element, an energy director (40) that concentrates the heating during ultrasonic welding and forms a material junction (42) between the two assembled elements after the ultrasonic welding, **characterized in that** the method consists of positioning a wire (44) between the two assembled elements, so as to be secant to the energy director (40), said wire (44) having suitable mechanical characteristics allowing it to cut the junction (42) formed by the energy director (40) and move the wire between the two assembled elements so as to cut said junction (42).

2. The method according to claim 1, **characterized in that** it consists of exerting a force on the wire (44) so as to cause one or more portions of the wire (44) to rotate around the junction (42) formed by the energy director (40), said rotational movement of the wire causing the separation of the two elements.

3. The method according to claim 1 or 2, **characterized in that** it consists of circulating an electric current in the wire (44) so as to cause heating of the wire by Joule effect.

4. An element that can be assembled to another element by ultrasonic welding and making it possible to implement the method according to any one of the preceding claims, said element comprising, at a front surface, an energy director (40) that concentrates the heating during ultrasonic welding and forms a material junction (42) after the ultrasonic welding, **characterized in that** the element comprises at least one wire (44), one portion of which is included in the energy director (40), said wire (44) having suitable mechanical characteristics making it able to cut the junction (42) formed by the energy director (40).

5. The element according to claim 4, **characterized in that** the wire (44) comprises gripping means.

6. The element according to claim 5, **characterized in that** the wire (44) comprises gripping means on either side of the energy director.

7. The element according to claim 5, **characterized in that** the wire (44) comprises gripping means at a first end and means to connect the wire to the element at a second end.

8. The element according to any one of claims 4 to 7, **characterized in that** the portion of the wire (44) included in the energy director is positioned in a plane substantially parallel to the surface comprising the energy director.

9. An element that can be assembled to another element by ultrasonic welding and making it possible to implement the method according to any one of claims 1 to 3, said element comprising, at a front surface, an energy director (40) that concentrates the heating during ultrasonic welding and forms a material junction (42) after the ultrasonic welding, and comprises, at the surface comprising the energy director, at least one groove (50) secant with the energy director (40) and making it possible to position at least one wire (44), **characterized in that** the groove (50) is secant with the energy director (40) at two points.

10. The element according to claim 9, **characterized in that** at a point of intersection with a groove (50), the energy director (40) comprises a notch (54).

11. The element according to claim 10, **characterized in that** the notch (54) extends over the entire height of the energy director (40).

12. The element according to any one of claims 4 to 11, **characterized in that** it comprises a wire (44) positioned in the groove (50).

13. The element according to claim 12, **characterized in that** the wire (44) is made from a fibrous material.

14. The element according to claim 12 or 13, **characterized in that** the wire (44) has a diameter of approximately 0.50 to 1 mm.

15. The element according to any one of claims 12 to 14, **characterized in that** the wire (44) is made from an electrically conductive material.
